# EUROPEAN PATENT APPLICATION

(11) **EP 4 813 839 A1**
(43) Date of publication of application: **30.09.2026**
(21) Application number: 26162529.7
(22) Date of filing: 05.03.2026
(51) Int. Cl.: B64D 27/18, B64D 27/40

(54) **ASSEMBLY FOR AN AIRCRAFT**

(30) Priority: 27.03.2025 US 202563778819 P
(71) Applicant: Airbus Operations S.A.S., 31060 Toulouse (FR)
(72) Inventor: LAFONT, Laurent, 31060 TOULOUSE (FR)
(74) Representative: Cabinet Le Guen Maillet

(57) **Abstract**

Assembly (100) for aircraft, said assembly (100) having a vertical median plane (P) and comprising a pylon (18) having a front face, a motor casing (16), two lugs (20a-b) attached to the pylon (18) and arranged in front of the front face, the lugs (20a-b) being arranged on both sides of the vertical median plane (P) and each being drilled with a bore, an external beam (22) having a first cylindrical end and a second end, and an internal beam (24) having a first cylindrical end and a second end, the first cylindrical end of the internal beam (24) being arranged inside the first cylindrical end of the external beam (22), the beams (22, 24) being mounted mobile in rotation in the bores around an axis perpendicular to the vertical median plane (P), and the two second ends being mounted articulated with the motor casing (16).

The proposed assembly is more compact

## Description

### TECHNICAL FIELD

The invention relates to an assembly for an aircraft and particularly to a forward mount attached between a motor casing and a pylon. The invention relates also to an aircraft comprising at least one such assembly.

### RELATED ART

Conventional forward engine mounts that must handle loads impose significant design constraints on the pylon.

### SUMMARY OF THE INVENTION

The proposed assembly is more compact and it provides a free space inside 12 o'clock bifurcation to install a dynamic scoop for air cooling system, and a simple and light pylon box. It is proposed an assembly for aircraft, said assembly having a vertical median plane and comprising:
- a pylon having a front face,
- a motor casing,
- two lugs attached to the pylon and arranged in front of the front face, the lugs being arranged on both sides of the vertical median plane and each being drilled with a bore,
- an external beam having a first cylindrical end and a second end, and
- an internal beam having a first cylindrical end and a second end, the first cylindrical end of the internal beam being arranged inside the first cylindrical end of the external beam, the beams being mounted mobile in rotation in the bores around an axis perpendicular to the vertical median plane, and the two second ends being mounted articulated with the motor casing.

The proposed assembly is more compact.

Advantageously, the assembly comprises:
- a front fitting attached to the pylon and arranged in front of the front face and drilled with two holes aligned vertically in the vertical median plane, and
- a vertical rod arranged in the holes with a lower end attached to the motor casing and an upper end emerging above the holes.

Advantageously, the assembly comprises a vertical abutment attached to the upper end of the vertical rod and designed to come into contact with the front fitting in case of failure of a main transfer path.

Advantageously, each beam comprises a lateral abutment and designed to come into contact with the associated lug in case of failure of a main transfer path.

The invention proposes also an aircraft comprising an assembly according to any one of the preceding embodiments.

### BRIEF DESCRIPTION OF THE DRAWINGS

The characteristics of the invention will emerge more clearly from a reading of the following description of at least one example of embodiment, said description being produced with reference to the accompanying drawings, among which:
- Fig. 1 is a side view of an aircraft comprising an assembly according to the invention,
- Fig. 2 is a cut view according to line II-II of Fig. 3 of the assembly of the invention,
- Fig. 3 is a cut view according to line III-III of Fig. 2 of the assembly of the invention,
- Fig. 4 is an exploded view of the assembly of the invention, and
- Fig. 5 is a top view of a detail of the assembly.

### DETAILED DESCRIPTION OF AT LEAST ONE EMBODIMENT

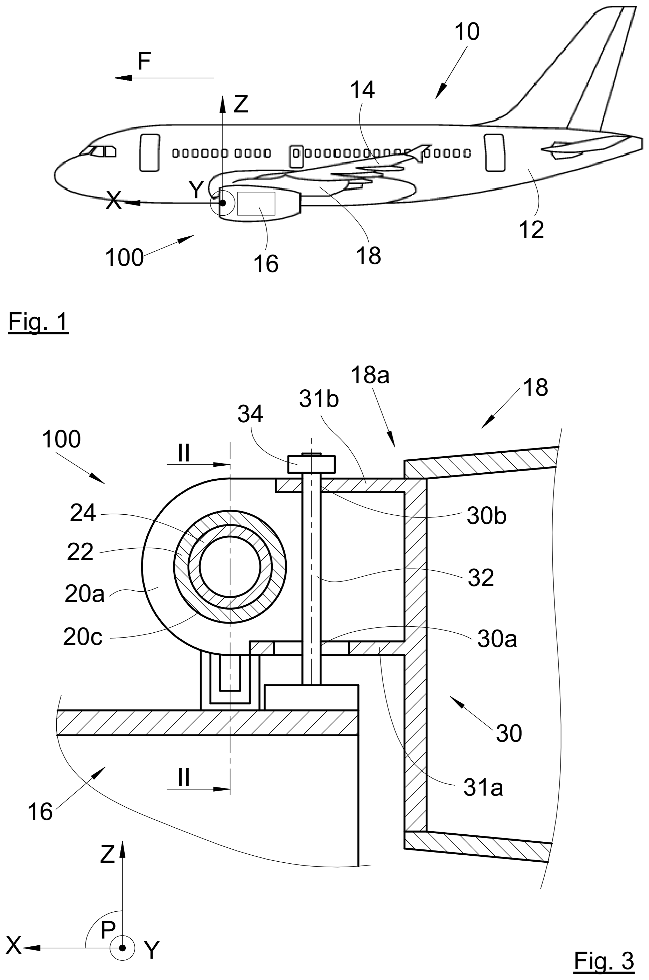

In the following description, terms relating to a position are taken with reference to an aircraft 10 in forward position, i.e. as shown in Fig. 1.

Fig. 1 shows an aircraft 10 that has a fuselage 12 on each side of which is attached a wing 14. Each wing 14 supports at least one engine comprising a motor casing 16, for example the fan casing, which is attached to the wing 14 via a pylon 18.

In the following description, and by convention, X is called the longitudinal axis of the engine oriented positively in the direction of advance of the aircraft 10, it is called Y, the transverse axis of the engine which is horizontal when the aircraft is on the ground, and Z, the vertical axis or vertical height when the aircraft is on the ground, these three axes X, Y and Z being mutually orthogonal. The fore and aft positions are taken in relation to the forward and aft of the aircraft 10. The direction of advancement of aircraft 10 is given by the arrow F which shows the direction in which aircraft 10 advances when engines are running. The engine has a vertical median plane P (XZ).

Between pylon 18 and the motor casing 16, the aircraft 10 has an engine attachment system that includes a forward engine mount.

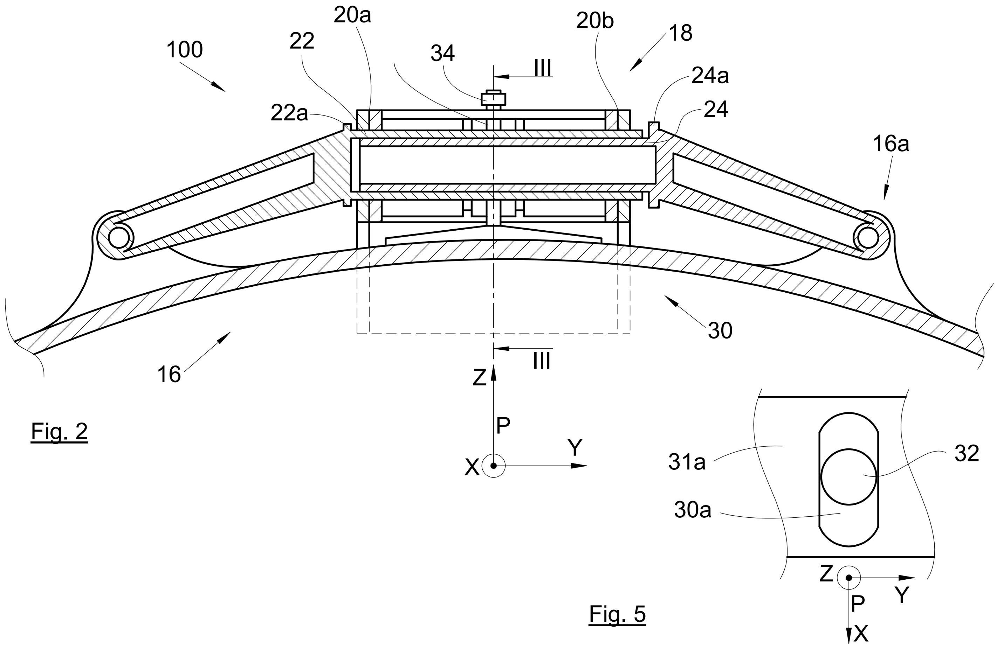

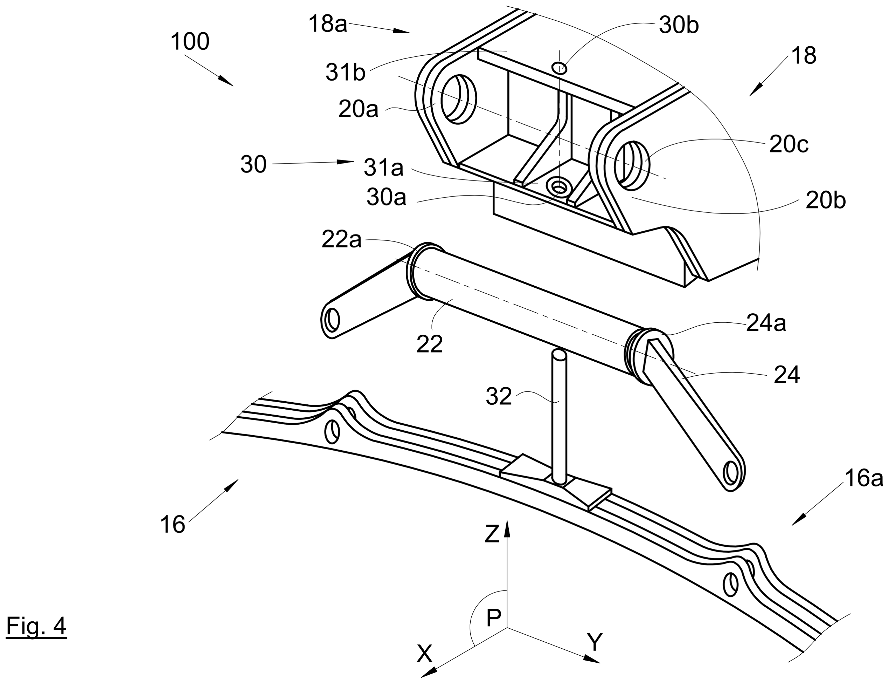

The forward engine mount, the pylon 18 and the motor casing 16 together form an assembly 100 according to the invention. The assembly 100 shares with engine the vertical median plane P. The Figs. 2 and 4 show different views of the assembly 100.

The pylon 18 has a front face 18a oriented towards the front.

The assembly 100 comprises two lugs 20a-b which are attached to the pylon 18 and which are arranged in front of the front face 18a. The lugs 20a-b and the pylon 18 can be separate components or integrated components. Here the lugs 20a-b are integrated into pylon lateral panels. For reasons of redundancy, each lug 20a-b is doubled.

The lugs 20a-b are arranged on both sides of the vertical median plane P, it means that there is one lug 20a-b on each side. Each lug 20a-b is drilled with a bore 20c. The two bores 20c are coaxial and the axis of the bores 20c is perpendicular to the vertical median plane P. Each lug 20a-b is in a plan parallel to the vertical median plane P.

The assembly 100 comprises also an external beam 22 having a first cylindrical end and a second end.

The assembly 100 comprises also an internal beam 24 having a first cylindrical end and a second end.

The first cylindrical end of the internal beam 24 is inserted inside the first cylindrical end of the external beam 22 and the beams 22 and 24, especially the two first cylindrical ends, are mounted mobile in rotation in the bores 20c of the lugs 20a-b around the axis of the bores 20c. Each beam 22, 24 is inserted in the two bores 20c, it means the bore 20c of each lug 20a-b.

The second end of each beam 22, 24 is mounted articulated with the motor casing 16. Here, each second end is attached to the motor casing 16 through a clevis joint 16a with a pivot joint around an axis parallel to the longitudinal axis X.

The two first ends can slide relative to each other along a direction perpendicular to the vertical median plane P, i.e. parallel to the transverse axis Y. This enables easy mounting and accommodates engine casing deformation.

The rotation on the pylon lugs 20a-b and on the motor casing 16 enable axial relative displacement.

With such arrangement, the assembly is compact as all parts may be located inside a nacelle profile surrounding the motor casing. Additionally, there are a reduced number of parts which help ensure light weight and may provide a lower cost. Furthermore, with the present design, the pylon height may be adjusted based on requirements of loads/stiffness. In addition, with the present design, most of the 12 o'clock bifurcation remains free of structure which may be used for air cooling system installation. Finally, with the present configuration, engine mounting/dismounting at the two lateral bearings may be accomplished with easy access. Here, the assembly 100 further comprises a front fitting 30 attached to the pylon 18 and arranged in front of the front face 18a. The front fitting 30 can be integral with the lugs 20a-b and/or the pylon 18 or separate components attached through welding for example.

Here, the front fitting 30 comprises two horizontal plates 31a-b arranged one above the other in horizontal planes parallel to XY.

The front fitting 30 is drilled with two holes 30a-b, more particularly, each horizontal plate 31a-b is drilled with one hole 30a-b. The two holes 30a-b are aligned vertically in the vertical median plane P.

The assembly 100 further comprises a vertical rod 32, also called "spigot", which is arranged in the two holes 30a-b with a lower end attached to the motor casing 16 and an upper end emerging above the two holes 30a-b. The vertical rod 32 crosses the two holes 30a-b.

In the current embodiment, the lower hole 30a is a slotted bearing as shown on Fig. 5.

Any side loads are transmitted directly from the motor casing 16 to the vertical rod 32, and to the pylon 18 through the front fitting 30. The slotted hole 30a ensures transmission of side loads while enabling free axial displacement along the longitudinal axis X.

This specific arrangement of the vertical rod 32 and the front fitting 30 provides an effective decoupling of the lateral load path from the vertical load path managed by the beams 22, 24, thereby simplifying the overall structural design and enhancing the system's robustness.

A main transfer path is created between the clevis joint 16a at the second end of each beam 22, 24, the combination of the beams 22 and 24 and the bores 20c, and the combination of the vertical rod 32 and the lower hole 30a.

The clevis joint 16a at the second end of each beam 22, 24 and the combination of the beams 22 and 24 and the bores 20c ensure the transfer of the vertical loads. The combination of the vertical rod 32 and the lower hole 30a ensures the transfer of the lateral loads.

To complete the transfer of the vertical loads in case of failure of the main transfer path, more particularly in case of failure of one of the clevis joint 16a, the assembly 100 comprises a vertical abutment 34 attached to the upper end of the vertical rod 32. The vertical abutment 34 is for example a nut screwed at the free end of the vertical rod 32 above the front fitting 30, and the upper plate 31b. In normal condition, the vertical abutment 34 is not in contact with the front fitting 30, here the upper plate 31b, and in case of failure, the vertical abutment 34 is designed to come into contact with the front fitting 30, here the upper plate 31b.

To ensure the transfer of the lateral loads in case of failure of the main transfer path, more particularly in case of failure of the vertical rod 32, each beam 22, 24 comprises a lateral abutment 22a, 24a. Here, each lateral abutment 22a, 24a takes the form of a collar. In normal condition, none of the lateral abutments 22a and 24a is in contact with the associated lug 20a-b, and in case of failure, at least one of the lateral abutments 22a and 24a is designed to come into contact with the associated lug 20a-b. The lateral loads are transferred through the clevis joint 16a at the second end of each beam 22, 24 and the combination of the lateral abutments 22a and 24a and the lug 20a-b.

## Claims

1. Assembly (100) for aircraft (10), said assembly (100) having a vertical median plane (P) and comprising:
- a pylon (18) having a front face (18a),
- a motor casing (16),
- two lugs (20a-b) attached to the pylon (18) and arranged in front of the front face (18a), the lugs (20a-b) being arranged on both sides of the vertical median plane (P) and each being drilled with a bore (20c),
- an external beam (22) having a first cylindrical end and a second end, and
- an internal beam (24) having a first cylindrical end and a second end, the first cylindrical end of the internal beam (24) being arranged inside the first cylindrical end of the external beam (22), the beams (22, 24) being mounted mobile in rotation in the bores (20c) around an axis perpendicular to the vertical median plane (P), and the two second ends being mounted articulated with the motor casing (16).

2. Assembly (100) according to claim 1, **characterized in that** it comprises:
- a front fitting (30) attached to the pylon (18) and arranged in front of the front face (18a) and drilled with two holes (30a-b) aligned vertically in the vertical median plane (P), and
- a vertical rod (32) arranged in the holes (30a-b) with a lower end attached to the motor casing (16) and an upper end emerging above the holes (30a-b).

3. Assembly (100) according to claim 2, **characterized in that** it comprises a vertical abutment (34) attached to the upper end of the vertical rod (32) and designed to come into contact with the front fitting (30) in case of failure of a main transfer path.

4. Assembly (100) according to any one of claims 1 to 3, **characterized in that** each beam (22, 24) comprises a lateral abutment (22a, 24a) and designed to come into contact with the associated lug (20a-b) in case of failure of a main transfer path.

5. Aircraft (10) comprising an assembly (100) according to any one of claims 1 to 4.
